# EUROPÄISCHE PATENTSCHRIFT

(11) **EP 0 797 728 B1**
(45) Veröffentlichungstag und Bekanntmachung des Hinweises auf die Patenterteilung: **26.08.1998**
(21) Anmeldenummer: 95941591.0
(22) Anmeldetag: 16.12.1995
(51) Int. Cl.: F02B 75/24, F01B 9/02

(54) **VERBRENNUNGSMOTOR FÜR EINEN ZWEITAKTBETRIEB**
TWO-STROKE INTERNAL COMBUSTION ENGINE
MOTEUR A COMBUSTION INTERNE A FONCTIONNEMENT A DEUX TEMPS

(30) Priorität: 18.12.1994 DE 4444767
(43) Veröffentlichungstag der Anmeldung: 01.10.1997
(73) Patentinhaber: RÖSSLE, Gottfried, D-71640 Ludwigsburg (DE)
(72) Erfinder: RÖSSLE, Gottfried, D-71640 Ludwigsburg (DE)
(74) Vertreter: KOHLER SCHMID + PARTNER
(86) Internationale Anmeldenummer: DE9501806
(87) Internationale Veröffentlichungsnummer: WO9619651

(56) Entgegenhaltungen:
- DE-C- 116 188
- US-A- 2 290 202
- US-A- 3 377 997
- US-A- 5 331 926

## Beschreibung

Die Erfindung betrifft einen Verbrennungsmotor für einen Zweitaktbetrieb mit einer Anzahl von Arbeitszylindern, wobei je zwei Arbeitszylinder getrennt durch ein Kurbelgehäuse einander fluchtend gegenüberliegen, wobei jeder Arbeitszylinder durch einen Zylinderboden von dem Kurbelgehäuse getrennt ist und der Zylinderboden mit einer Öffnung zur Durchleitung einer Kolbenstange versehen ist, wobei jeweils zwei gegenüberliegende Arbeitszylinder eine gemeinsame Kolbenstange aufweisen, an deren Enden die Kolben der Arbeitszylinder befestigt sind, wobei etwa in der Mitte der Kolbenstange eine Kurbeleinrichtung, insbesondere eine Kurbelkulisse, angeordnet ist, in welcher sich ein Kulissenstein quer zur Längsachse einer Kurbelwelle hin und her bewegt und in dem Kulissenstein ein Kurbelzapfen der Kurbelwelle gelagert ist, wobei der Kolben eines Arbeitszylinders den Zylinderhohlraum in einen oberen und in einen unteren Zylinderraum teilt, und wobei der untere Zylinderraum bei der Aufwärtsbewegung des Kolbens der Ladung insbesondere eines Kraftstoff-Luft-Gemisches und bei der Abwärtsbewegung der Verdichtung des Gemisches dient und der obere Zylinderraum bei der Aufwärtsbewegung der Verdichtung eines Gemisches und bei der Abwärtsbewegung der Arbeitsleistung des Gemisches dient.

Ein derartiger Zweitaktmotor ist durch die DE-PS 409919 bekanntgeworden. Bei diesem als "Zweitakt-Verbrennungsmaschine mit zwei gegenüberliegenden Zylindern" bezeichneten Verbrennungsmotor sind Pumpenräume, in welchen ein Brennstoffluftgemisch vorverdichtet wird, vom Kurbelgehäuse abgesperrt. Dabei werden der Einlaß für die Pumpenräume und der Überstrom- und Auspuffkanal vom Kolben gesteuert, wobei die Übertragung der Kolbenbewegung auf die sich drehende Kurbelwelle mittels einer Kurbelschleife erfolgt.

Nachteiligerweise spült dieser Kurbel schleifen- Zweitakt -Verbrennungsmotor, während sich der Kolben durch den unteren Totpunkt bewegt, das Abgas mit frischem Kraftstoff-Luft-Gemisch (Frischgas) aus dem Arbeitszylinder. Da zu diesem Zeitpunkt verfahrenbedingt Einlaß- und Auslaßöffnung gleichzeitig geöffnet sind, läßt sich nicht vermeiden, daß ein Teil des Frischgases mit dem Abgas hinausgespült wird. Die Spülverluste führen zu erhöhtem Brennstoffverbrauch und hohen Kohlenmonoxid- und Kohlenwasserstoff-Konzentrationen im Abgas, zu erhöhter Partikelbildung, Verkokung und Verschleiß.

Der vorliegenden Erfindung liegt daher die Aufgabe zugrunde, einen Verbrennungsmotor der eingangs genannten Art dahingehend weiterzuentwickeln, daß die oben genannten Nachteile vermieden werden können.

Diese Aufgabe wird erfindungsgemäß dadurch gelöst, daß der untere und der obere Zylinderraum jedes Arbeitszylinders über mindestens eine, in der Nähe des Zylinderdeckels liegende Einlaßöffnung und über mindestens eine, in der Nähe des Zylinderbodens liegende Auslaßöffnung mit einem parallel zum Arbeitszylinder angeordneten Speicherraum verbindbar sind, wobei die Speicherräume zweier einander gegenüberliegender Arbeitszylinder fluchtend angeordnet sind daß ein als Hohlzylinder ausgebildeter Steuerschieber vorgesehen ist, der in Richtung der Längsachse der Arbeitszylinder innerhalb des Speicherraums verschiebbar ist, und daß der Steuerschieber entsprechend den Öffnungen des Speicherraums Ausnehmungen aufweist, die über die Öffnungen verschiebbar angeordnet sind, um die Zylinderräume an den Speicherraum anzuschließen.

Erfindungsgemäß werden die Spülverluste dadurch vermieden, daß auf die Spülung verzichtet wird. Während sich der Kolben etwa durch seinen unteren Totpunkt bewegt, entweicht das Abgas durch die Auslaßöffnung. Bei der hohen Temperatur ist die Abgasmasse, welche nach Schließen der Auslaßöffnung noch verbleibt, gering. Das während des anschließenden Verdichtungshubs eingebrachte Frischgas vermischt sich mit dem verbliebenen Abgas. Der Verzicht auf die Spülung führt zu einer gut dosierten Abgasbeimischung, die sich vermindernd auf die Stickoxidemissionen auswirkt.

Spülverluste können auch dadurch vermieden werden, daß eine Spülung mit reiner Frischluft aus einer Verdichterhilfsmachine (z.B. Abgasturboverdichter) vorgenommen wird. Während sich der Kolben etwa durch seinen unteren Totpunkt bewegt, wird das Abgas durch die Auslaßöffnung gedrängt. Die verbleibende Spülluft zusammen mit dem im anschließenden Verdichtungshub eingebrachten Frischgas ergeben die doppelte reaktive Gasmasse, so daß etwa die doppelte Leistung erwartet werden kann. Noch höhere Leistungen lassen sich erzielen, wenn die Hilfsmaschine auch als Lader benutzbar ist. Durch die Nutzung der Hilfsmaschine als Spüler und Lader wird eine Vergleichmäßigung in der Belastung der Hilfsmaschine erreicht, so daß nunmehr auch Motoren mit geringer Zylinderanzahl von den Vorteilen einer Verdichterhilfsmaschine profitieren können.

Während Zweitaktmotoren herkömmlicher Bauart das Frischgas durch den Spülvorgang im unteren Totpunkt des Kolbens innerhalb einer allzu kurzen Zeitspanne in den Arbeitszylinder einbringen müssen, steht bei dem erfindungsgemäßen Motor der ganze Verdichtungshub zur Verfügung. Dadurch werden Strömungsverluste auf ein Minimum reduziert.

Das Laden während des Verdichtens kann jedoch nicht vom unteren Zylinderraum des betreffenden Arbeitszylinders durchgeführt werden, da der untere Zylinderraum sich im Stadium der Expansion befindet. Daher wird jede Ladung eines oberen Zylinderraumes durch Beiträge der unteren Zylinderräume anderer Arbeitszylinder aufgebracht. Grundsätzlich kann ein zur Ladung beitragender Arbeitszylinder gegenüberliegend oder nebenliegend angeordnet sein.

Mindestens ein Speicherraum, an welchen mindestens zwei Arbeitszylinder angeschlossen sind in der Weise, daß für jeden angeschlossenen Arbeitszylinder mindestens eine Einlaßöffnung vorgesehen ist, durch welche ein Frischgasstrom von dem Speicherraum in den Hohlzylinder bzw. Frischgas-Steuerschieber strömen kann, und mindestens je eine Auslaßöffnung, durch welche ein Frischgasstrom aus dem Hohlzylinder bzw. Frischgas-Steuerschieber in den Speicherraum strömen kann, sind vorgesehen.

Der Speicherraum ist als Hohlzylinder gebildet, dessen Längsachse zu den Längsachsen der angeschlossenen Arbeitszylinder parallel verläuft, und welcher von einem als Hohlzylinder ausgebildeten Frischgas-Steuerschieber ausgefüllt ist, der in dem Speicherraum verschiebbar gelagert ist.

Der Frischgas-Steuerschieber ist mit Ausnehmungen entsprechend den Einlaß- und Auslaßöffnungen des Speicherraums versehen, und die Ausnehmungen sind über die Öffnungen verschiebbar in der Weise, daß die Öffnungen mit dem Frischgas-Steuerschieber geöffnet und geschlossen werden können, so daß Frischgas aus den unteren Zylinderräumen in den Hohlzylinder des Frischgas-Steuerschiebers einströmen oder Frischgas aus dem Hohlzylinder des Frischgas-Steuerschiebers in die oberen Zylinderräume ausströmen kann.

Der Frischgas-Steuerschieber ist in einer vorteilhaften Ausführung an seinen Stirnseiten durch Deckel verschlossen.

Der Hohlzylinder des Frischgas-Steuerschiebers kann durch Wände aufgeteilt sein. Solche Wände sind erforderlich, wenn das im Speicherraum gelagerte Frischgas einer Behandlung unterzogen werden soll und das behandelte Frischgas nicht mit dem unbehandelten in Berührung kommen darf. Der Speicherraum muß in diesem Fall mit mindestens einer Einlaßöffnung und mindestens einer Auslaßöffnung mit der Behandlungskammer verbunden sein. Ebenso muß der Frischgas-Steuerschieber mit den entsprechenden zusätzlichen Ausnehmungen versehen sein.

Zum Zwecke der Behandlung wird das Frischgas in eine Unterteilung des Frischgas-Steuerschiebers geleitet und von dort einer Behandlungskammer oder mehreren hintereinandergeschalteten Behandlungskammern zugeführt und nach der Behandlung in eine Unterteilung des Speicherraums zurückgeleitet und den oberen Zylinderräumen zugeführt.

Vorteilhafterweise sind alle technisch möglichen und sinnvollen Behandlungs- und Veredelungsmaßnahmen der im Speicherraum gelagerten Frischgase in verschiedenen möglichen Behandlungskammern vorgesehen. Es kann vorgesehen sein,
- daß die Behandlungskammer ein Wärmetauscher wie z.B. ein Ladeluft-Zwischenkühler ist, mit welchem dem System Wärme entzogen werden kann,
- daß die Behandlungskammer ein Wärmetauscher ist, mit welchem dem System Wärme zugeführt werden kann, beispielsweise Abwärme aus Prozessen oder die Wärme eines angeschlossenen Brenners für einen reinen oder mit einer motorischen Verbrennung kombinierten Heißluftmotorbetrieb eingebracht werden kann,
- daß die Behandlungskammer die Erzeugung eines Emulsionskraftstoffes durch Zugabe von Wasser oder Wasserdampf und durch Zugabe eines Emulagators ermöglicht,
- daß die Behandlungskammer mit einem Filter ausgerüstet ist,
- daß die Behandlungskammer mit einem Katalysator ausgerüstet ist,
- daß die Behandlungskammer ein Reaktor ist, mit dessen Hilfe durch Zugabe von reaktiven Stoffen eine Verbesserung der Abgasqualität bzw. eine Verminderung der Schadstoffemissionen bewirkt werden kann,
- daß die Behandlungskammer eine Kombination der genannten Möglichkeiten darstellt oder eine hier nicht genannte Behandlung ermöglicht.

In einer vorteilhaften Ausführungsform der Erfindung ist vorgesehen, daß die Bewegungen des Frischgas-Steuerschiebers an die Bewegungen der Kolben gekoppelt sind und unmittelbar oder mittelbar durch einen Exzenter der Kurbelwelle bewegt werden.

Der Frischgas-Steuerschieber kann auch so ausgebildet sein, daß der Abstand zur Kurbelwelle verstellbar ist, so daß das Öffnen und Schließen der Öffnungen des Speicherraumes gegenüber den Kolbenbewegungen verschiebbar ist.

Hinsichtlich der Anzahl der Arbeitszylinder sind verschiedene Konstruktionsmerkmale zu beachten:
Bei zwei Arbeitszylindern findet die pneumatische Zusammenarbeit mit dem jeweils gegenüberliegenden Arbeitszylinder statt. Um das Frischgas von einem Arbeitszylinder zu dem gegenüberliegenden Arbeitszylinder leiten zu können, muß der Frischgas-Steuerschieber mit seinem Hohlzylinder das Kurbelgehäuse überqueren. Dies ist möglich, wenn die Kurbelwelle seitlich versetzt angeordnet ist und die Vorrichtungen zur Verbindung von Kolbenstange und Frischgas-Steuerschieber mit der Kurbelwelle seitlich angeordnet sind.
Bei einer durch vier teilbaren Anzahl von Arbeitszylindern findet die pneumatische Zusammenarbeit vorzugsweise zwischen jeweils zwei nebeneinanderliegenden Arbeitszylindern statt, deren Einlaß- und Auslaßöffnungen mit dem Speicherraum verbunden sind. Es können zwei gegenüberliegende Frischgas-Steuerschieber miteinander zu einer Frischgas-Steuerschiebereinheit vereinigt werden. Auf diese Weise können mit einem Kurbelwellenexzenter jeweils vier Arbeitszylinder bedient werden.

In einer Ausführungsform der Erfindung ist vorgesehen, daß in den Arbeitszylindern - außer den Öffnungen für den Speicherraum - Öffnungen für Einlaßkanäle für Frischluft bzw. für Frischgas und für Spülluft und Auslaßkanäle für Abgas eingerichtet sind, die über weitere Steuerschieber verschließbar sind, und diese Steuerschieber unmittelbar oder mittelbar durch einen Exzenter der Kurbelwelle bewegt werden. Damit ist sichergestellt, daß sämtliche Steuerungsaufgaben am Motor ausschließlich von der ohnehin zur Leistungsübertragung erforderlichen Kurbelwelle erledigt werden.

Die Spülluft-Einlaßöffnung kann zusammen mit der Abgas-Auslaßöffnung durch einen gemeinsamen Steuerschieber (Spülluft-Abgas-Schieber) verschließbar sein. Mit dieser Maßnahme wird für den Spüllufteinlaß und für den Abgasauslaß nur ein Steuerschieber benötigt.

Ein Teil des Spülluftkanals wird eingespart, indem der Hohlraum, in welchem sich der Steuerschieber bewegt, einen Teil des Spülluftkanals bildet.

Ferner sind zum Ausgleich eines Druckunterschieds zwischen Spülluftkanal und Arbeitszylinder Öffnungen vorgesehen.

Weitere Vorteile ergeben sich aus der Beschreibung der beigefügten Zeichnung. Ebenso können die vorstehend genannten und die noch weiter aufgeführten Merkmale erfindungsgemäß jeweils einzeln oder in beliebiger Kombination miteinander verwendet werden. Die erwähnten Ausführungsformen sind nicht als abschließende Ausführungsform zu verstehen, sondern haben vielmehr beispielhaften Charakter.

Ein Ausführungsbeispiel der Erfindung ist in der Zeichnung dargestellt und wird im folgenden näher erläutert. Es handelt sich dabei um einen Vierzylindermotor, welcher teilweise stark schematisiert und nicht maßstäblich zu verstehen ist.

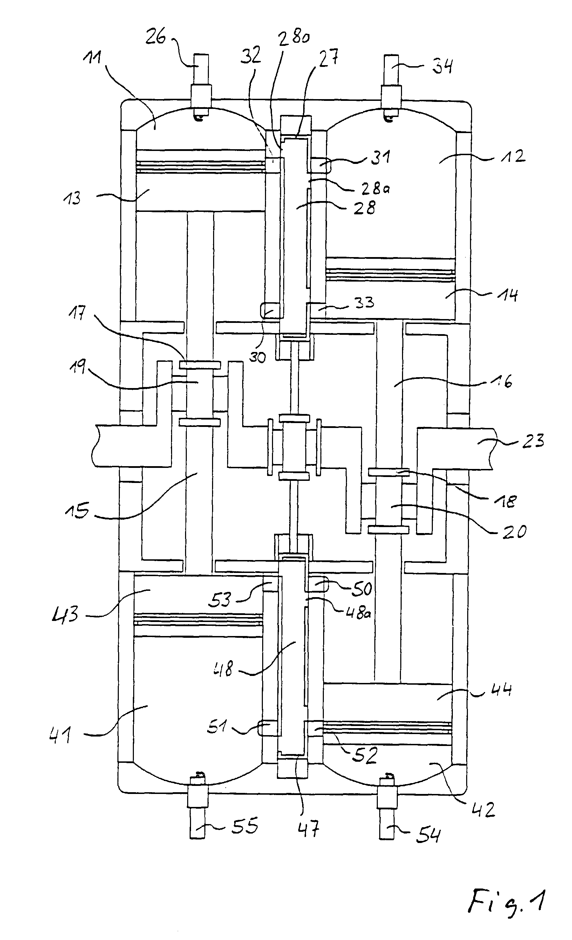

Die Figur 1 zeigt eine Draufsicht einer beispielhaften Ausführung des erfindungsgemäßen Verbrennungsmotors.

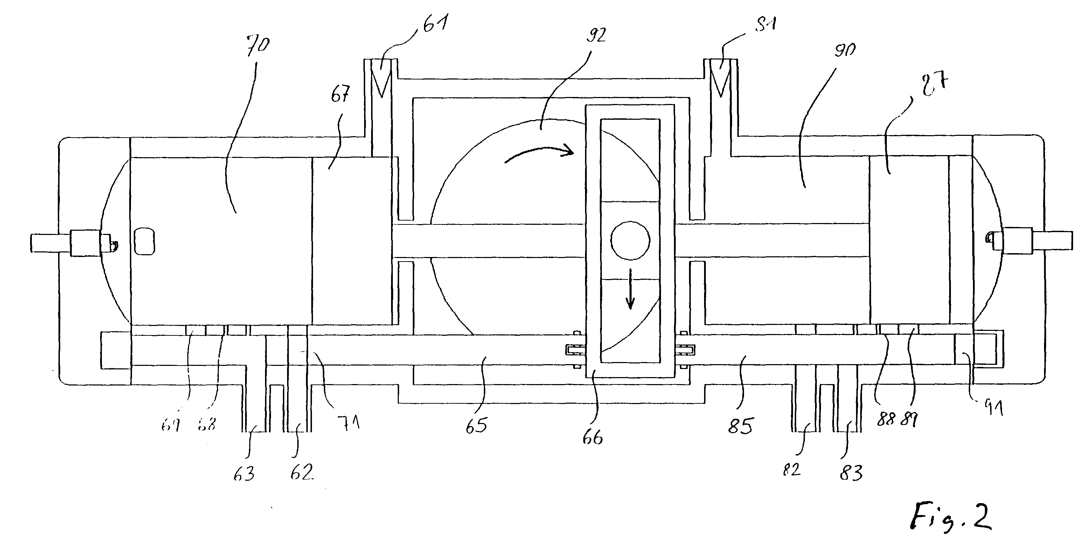

Die Figur 2 zeigt einen Querschnitt einer beispielhaften Ausführung des erfindungsgemäßen Verbrennungsmotors.

In einem Zylindergehäuse sind Arbeitszylinder 11 und 12 untergebracht, worin Kolben 13 und 14 hin und her bewegt werden können. Die Kolben 13 und 14 sind über Kolbenstangen 15 und 16 mit Kurbelkulissen 17 und 18 verbunden. In den Kurbelkulissen 17 und 18 sind Kulissensteine 19 und 20 beweglich angeordnet, die über die Kolben 13 und 14 und die Kurbelkulissen 17 und 18 angetrieben werden. Die Kulissensteine 19 und 20 leiten die Kraft auf nicht sichtbare Kurbelzapfen der Kurbelwelle 23. eine solche Mechanik ist beispielsweise im Hillekum-Motor (Erfinder Gottfried Hillekum) verwirklicht.

In der ersten Totpunktstellung der Kolben 13 und 14 nimmt ein Frischgas-Steuerschieber 27 seine Mittelstellung ein. In dieser Stellung sind Öffnungen 30, 31, 32 und 33 des Speicherraums 28 durch den Frischgas-Steuerschieber 27 geschlossen. Nach einer Zündung der Zündkerze 26 legt der Kolben 13 die erste Hubhälfte nach unten und der Kolben 14 die erste Hubhälfte nach oben zurück. Der Frischgas-Steuerschieber 27 bewegt sich um einen halben Hub nach oben und öffnet die Einlaßöffnung 30 des Speicherraums 28. Dadurch kann das im unteren Zylinderraum des Arbeitszylinders 11 eingeschlossene Kraftstoff-Luft-Gemisch in den Speicherraum 28 entweichen.

Die Aufgabe des Speichers in einem erfindungsgemäßen Zweitaktmotor wird dadurch erleichtert, daß ebenso viele gleichläufige wie gegenläufige Arbeitszylinder angeschlossen sind.

So ist stets das von den angeschlossenen gleichläufigen Arbeitszylindern eingespeiste Volumen etwa gleich dem von den gegenläufigen entnommenen Volumen. Damit werden Druckschwankungen im Speicher vermieden. Der Arbeitszylinder 12 gehört in bezug auf den Arbeitszylinder 11 zur Gruppe der gegenläufigen Arbeitszylinder.

Nunmehr hat der Arbeitszylinder 12 mit seinem oberen Zylinderraum Bedarf nach einem Volumen des Kraftstoff-Luft-Gemisches. Dieser Bedarf wird aus dem Speicherraum 28 befriedigt. Durch die Bewegung des Frischgas-Steuerschiebers 27 um einen halben Hub nach oben öffnet sich auch die Auslaßöffnung 31 des Speicherraums 28, so daß das Kraftstoff-Luft-Gemisch aus dem Speicher 28 in den oberen Zylinderraum des Arbeitszylinders 12 einströmen kann. Während die Kolben ihre zweite Hubhälfte zurücklegen, bewegt sich der Frischgas-Steuerschieber 27 um einen halben Hub abwärts zurück in seine Mittelstellung.

In der zweiten Totpunktstellung der Kolben 13 und 14 sind Öffnungen 30, 31, 32 und 33 des Speicherraums 28 durch den Frischgas-Steuerschieber 27 geschlossen. Nach einer Zündung der Zündkerze 34 legt der Kolben 14 die erste Hubhälfte nach unten und der Kolben 13 die erste Hubhälfte nach oben zurück. Der Frischgas-Steuerschieber 27 bewegt sich um einen halben Hub nach unten und öffnet die Einlaßöffnung 33 des Speicherraums 28. Dadurch kann das im unteren Zylinderraum des Arbeitszylinders 12 eingeschlossene Kraftstoff-Luft-Gemisch in den Speicherraum 28 entweichen.

Nunmehr hat der Arbeitszylinder 11 mit seinem oberen Zylinderraum Bedarf nach einem Volumen des Kraftstoff-Luft-Gemisches. Dieser Bedarf wird aus dem Speicherraum 28 befriedigt. Durch die Bewegung des Frischgas-Steuerschiebers 27 um einen halben Hub nach unten öffnet sich auch die Auslaßöffnung 32 des Speicherraums 28, so daß das Kraftstoff-Luft-Gemisch aus dem Speicher 28 in den oberen Zylinderraum des Arbeitszylinders 11 einströmen kann.

Während die Kolben ihre zweite Hubhälfte zurücklegen, bewegt sich der Frischgas-Steuerschieber 27 um einen halben Hub aufwärts zurück in seine Mittelstellung und schließt dabei die Einlaßöffnung 33 und die Auslaßöffnung 32 des Speicherraums 28. Damit ist die Ausgangsstellung erreicht.

Den Arbeitszylindern 11 und 12 mit den Zündkerzen 26 und 34 sind Arbeitszylinder 41 und 42 direkt gegenüber angeordnet. Kolben 43 und 44 der Arbeitszylinder 41 und 42 sind über die gemeinsame Kolbenstangen 15 und 16 mit den Kurbelkulissen 17 und 18 verbunden. Die Bewegung des Kolbens 43 ist mit der Bewegung des Kolbens 13 gekoppelt, während die Bewegung des Kolbens 44 mit der Bewegung des Kolbens 14 gekoppelt ist. Gegenüber dem Speicherraum 28 mit dem Frischgas-Steuerschieber 27 und den Öffnungen 30, 31, 32 und 33 befindet sich der Speicherraum 48 mit dem Frischgas-Steuerschieber 47 und den Öffnungen 51, 52, 53 und 54. Die Bewegung des Frischgas-Steuerschiebers 47 ist mit den Bewegungen des Frischgas-Steuerschiebers 27 gekoppelt.

Bei den Arbeitszylindern 70 und 90 werden die Frischluft-Einlaßkanäle 61 und 81 über Saugventile gesteuert, die Abgas-Auslaßkanäle 62 und 82 und die Spülluft-Einlaßkanäle 63 und 83 über die Spülluft-Abgas-Schieber 65 und 85, die mit der Kurbelkulisse 66 verbunden sind. Durch die Verbindung mit der Kurbelkulisse sind die Spülluft-Abgas-Schieber 65 und 85 an die Bewegungen der Kolben 67 und 87 und damit an die Bewegungen der Kurbelwelle 92 gekoppelt. Ein freies Ende der Abgas-Frischgasschieber 65 und 85 öffnet und schließt die Spülluft-Einlaßkanäle 63 und 83. Die Kanaldurchlässe 71 und 91 der Spülluft-Abgas-Schieber 65 und 85 kommen mit den Abgas-Auslaßkanälen 62 und 82 zur Deckung, so daß das Abgas etwa im unteren Totpunkt der Kolben 67 und 87 zusammen mit der eingeblasenen Spülluft entweichen kann. Durchbrüche 68 und 88 sorgen dafür, daß bei der Bewegung der Spülluft-Abgas-Schieber 65 und 85 nach unten der hohe Druck des in den Kanaldurchlässen 71 und 91 des beim Passieren der Öffnungen 69 und 89 eingefangenen Abgases abgebaut werden.

## Patentansprüche

1. Verbrennungsmotor für einen Zweitaktbetrieb mit einer Anzahl von Arbeitszylindern (11, 12, 41, 42; 70, 90), wobei je zwei Arbeitszylinder (11, 12,; 41, 42; 70, 90) getrennt durch ein Kurbelgehäuse einander fluchtend gegenüberliegen, wobei jeder Arbeitszylinder (11, 12, 41, 42) durch einen Zylinderboden von dem Kurbelgehäuse getrennt ist und der Zylinderboden mit einer Öffnung zur Durchleitung einer Kolbenstange (15, 16) versehen ist, wobei jeweils zwei gegenüberliegende Arbeitszylinder (11, 12; 41, 42; 70, 90) eine gemeinsame Kolbenstange (15; 16) aufweisen, an deren Enden die Kolben (12, 13, 43, 44; 67, 87) der Arbeitszylinder (11, 12, 41, 42; 70, 90) befestigt sind, wobei etwa in der Mitte der Kolbenstange (15, 16) eine Kurbeleinrichtung, insbesondere eine Kurbelkulisse (17, 18; 66), angeordnet ist, in welcher sich ein Kulissenstein (19, 20) quer zur Längsachse einer Kurbelwelle (23) hin und her bewegt und in dem Kulissenstein (19, 20) ein Kurbelzapfen der Kurbelwelle (23; 92) gelagert ist, wobei der Kolben (13, 14, 43, 44; 67, 87) eines Arbeitszylinders (11, 12, 41, 42; 70, 90) den Zylinderhohlraum in einen oberen und in einen unteren Zylinderraum teilt, und wobei der untere Zylinderraum bei der Aufwärtsbewegung des Kolbens (13, 14, 43, 44; 67, 87) der Ladung insbesondere eines Kraftstoff-Luft-Gemisches und bei der Abwärtsbewegung der Verdichtung des Gemisches dient und der obere Zylinderraum bei der Aufwärtsbewegung der Verdichtung eines Gemisches und bei der Abwärtsbewegung der Arbeitsleistung des Gemisches dient,
dadurch gekennzeichnet,
daß der untere und der obere Zylinderraum jedes Arbeitszylinders (11, 12, 41, 42; 70, 90) über mindestens eine, in der Nähe des Zylinderdeckels liegende Einlaßöffnung (30, 33, 50, 53) und über mindestens eine, in der Nähe des Zylinderbodens liegende Auslaßöffnung (31, 32, 51, 52) mit einem parallel zum Arbeitszylinder (11, 12, 41, 42; 70, 90) angeordneten Speicherraum (28, 48) verbindbar sind, wobei die Speicherräume (28, 48) zweier einander gegenüberliegender Arbeitszylinder (11, 41; 12, 42; 70, 90) fluchtend angeordnet sind,
daß ein als Hohlzylinder ausgebildeter Steuerschieber (27, 47) vorgesehen ist, der in Richtung der Längsachse der Arbeitszylinder (11, 12, 41, 42; 70, 90) innerhalb des Speicherraums (28, 48) verschiebbar ist, und daß der Steuerschieber (27, 47) entsprechend den Öffnungen (30, 31, 32, 33, 50, 51, 52, 53) des Speicherraums (28, 48) Ausnehmungen (28a, 48a) aufweist, die über die Öffnungen (30, 31, 32, 33, 50, 51, 52, 53) verschiebbar angeordnet sind, um die Zylinderräume an den Speicherraum (28, 48) anzuschließen.

2. Verbrennungsmotor nach Anspruch 1, dadurch gekennzeichnet, daß der Speicherraum (28, 48) in mehrere hintereinander angeordnete Speicherräume unterteilt ist, in denen ein einziger Steuerschieber (27, 47) verschiebbar angeordnet ist.

3. Verbrennungsmotor nach Anspruch 1 oder 2, dadurch gekennzeichnet, daß der Steuerschieber (27, 47) an seinen Stirnseiten durch Deckel verschlossen ist.

4. Verbrennungsmotor nach einem der vorhergehenden Ansprüche, dadurch gekennzeichnet, daß der Hohlraum des Steuerschiebers (27, 47) durch Wände aufgeteilt ist.

5. Verbrennungsmotor nach einem der vorhergehenden Ansprüche, dadurch gekennzeichnet, daß die Bewegungen des Steuerschiebers (27, 47) an die Bewegungen der Kolben (13, 14, 43, 44; 67, 87) gekoppelt sind.

6. Verbrennungsmotor nach einem der vorhergehenden Ansprüche, dadurch gekennzeichnet, daß der Steuerschieber (27, 47) von einem Exzenter der Kurbelwelle (23; 92) bewegbar ist.

7. Verbrennungsmotor nach einem der vorhergehenden Ansprüche, dadurch gekennzeichnet, daß der Steuerschieber (27, 47) relativ zur Kurbelwelle (23; 92) verstellbar ist.

8. Verbrennungsmotor nach einem der vorhergehenden Ansprüche, dadurch gekennzeichnet, daß die Kurbelwelle (23; 92) seitlich versetzt angeordnet ist, daß zwei einander gegenüberliegende Speicherräume (28, 48) einen gemeinsamen, das Kurbelgehäuse überbrückenden Steuerschieber (27, 47) mit einem ungeteilten Hohlraum aufweisen und daß der Steuerschieber (27, 47) über eine seitlich auskragende Einrichtung, insbesondere eine seitlich befestigte Kulisse, von einem Exzenter der seitlich versetzten Kurbelwelle (23; 92) bewegbar ist.

9. Verbrennungsmotor nach einem der Ansprüche 1 bis 7, dadurch gekennzeichnet, daß die Steuerschieber (27, 47) zweier gegenüberliegender Speicherräume (28, 48) miteinander durch eine Schieberstange zu einer Steuerschieber-Einheit verbunden sind und daß die Steuerschieber-Einheit über eine geeignete Einrichtung, insbesondere eine Kulisse, von einem Exzenter der Kurbelwelle (23, 92) bewegbar ist.

10. Verbrennungsmotor nach einem der vorhergehenden Ansprüche, dadurch gekennzeichnet, daß durch die Ausnehmungen (28a, 48a) in den Steuerschiebern (27, 47) beim Verschieben des Steuerschiebers (27, 47) im Wechsel zuerst die Auslaßöffnung (32) eines ersten Arbeitszylinders (11; 41) zusammen mit der Einlaßöffnung (33) eines zweiten gegenläufigen Arbeitszylinders (12; 42) öffnenbar und anschließend verschließbar sind, damit verdichtetes Gas aus dem ersten Arbeitszylinder (11) in den Hohlraum des Steuerschiebers (27, 47) und von dort verdichtetes Gas in den zweiten Arbeitszylinder (12) gepreßt werden kann, und sodann die Auslaßöffnung (31) des zweiten Arbeitszylinders (12) zusammen mit der Einlaßöffnung (30) des ersten Arbeitszylinders (11) öffnenbar und anschließend verschließbar sind, damit verdichtetes Gas aus dem ersten Arbeitszylinder (11) in den Hohlraum (28, 48) des Steuerschiebers (27, 47) und von dort verdichtetes Gas in den zweiten Arbeitszylinder (12) gepreßt werden kann.

11. Verbrennungsmotor nach einem der vorhergehenden Ansprüche, dadurch gekennzeichnet, daß der Hohlraum eines Steuerschiebers (27, 47) durch quer zu seiner Längsachse verlaufende Trennwände geteilt ist, wodurch der Gasstrom auf seinem Weg vom einen zum anderen Arbeitszylinder (11, 12; 41, 42) über eine Behandlungskammer geleitet werden kann.

12. Verbrennungsmotor nach einem der vorhergehenden Ansprüche, dadurch gekennzeichnet, daß in den Arbeitszylindern (11, 12, 41, 42) Öffnungen für Einlaßkanäle (61, 81; 63, 83) für Frischluft bzw. für Kraftstoff-Luft-Gemisch und für Spülluft und Auslaßkanäle (62, 82) für Abgas vorgesehen sind, die über weitere Steuerschieber (65, 85) verschließbar sind, wobei diese weiteren Steuerschieber (65, 85) unmittelbar oder mittelbar durch einen Exzenter der Kurbelwelle (92) bewegt werden.

13. Verbrennungsmotor nach Anspruch 12, dadurch gekennzeichnet, daß die Spülluft-Einlaßöffnung (63, 83) zusammen mit der Abgas-Auslaßöffnung (62, 82) durch einen gemeinsamen Spülluft-Abgas-Schieber (65, 85) verschließbar sind.

14. Verbrennungsmotor nach Anspruch 13, dadurch gekennzeichnet, daß der Hohlraum, in welchem sich der Spülluft-Abgas-Schieber (65, 85) bewegt, einen Teil des Spülluftkanals bildet.

15. Verbrennungsmotor nach Anspruch 14, dadurch gekennzeichnet, daß der Hohlraum, in welchem sich der Spülluft-Abgas-Schieber (65, 85) bewegt, durch Öffnungen mit dem Zylinder (70, 90) verbunden ist.

16. Verbrennungsmotor nach einem der vorhergehenden Ansprüche, dadurch gekennzeichnet, daß der Verbrennungsmotor eine Verdichterhilfsmaschine, insbesondere einen Abgasturboverdichter, zum Spülen der oberen Zylinderräume und zugleich zum Laden der unteren Zylinderräume aufweist.

17. Verbrennungsmotor nach einem der vorhergehenden Ansprüche, dadurch gekennzeichnet, daß an die Speicherräume (28, 48) weitere im Motor vorhandene Hohlräume, insbesondere ein Behandlungsbehälter, anschließbar sind und daß für jeden angeschlossenen Hohlraum mindestens je eine Einlaßöffnung, durch welche ein Gasstrom von dem Hohlraum in den Speicherraum (28; 48) strömen kann, und mindestens je eine Auslaßöffnung, durch welche ein Gasstrom aus dem Speicherraum (28; 48) in den Hohlraum fließen kann, vorgesehen sind.

## Claims

1. Two-stroke internal combustion engine having a number of working cylinders (11, 12, 41, 42; 70, 90), wherein each pair of working cylinders (11, 12,; 41, 42; 70, 90) is separated by a crank case and aligned opposite another, and each working cylinder (11, 12, 41, 42) is separated from the crank case by a cylinder base with the cylinder base having an opening for feed-through of a piston rod (15, 16), wherein two oppositely lying working cylinders (11, 12; 41,42; 70, 90) each have a common piston rod (15; 16) at the ends of which the pistons (12, 13, 43, 44; 67, 87) of the working cylinders (11, 12, 41, 42; 70, 90) are attached, and a crank device, in particular a crank link (17, 18; 66), is disposed at the approximate middle of the piston rod (15, 16) and has a link block (19, 20) moving back and forth therein in a direction transverse to the longitudinal axis of a crank shaft (23), with a crank shaft (23; 92) pin being borne in the link block (19, 20), wherein the piston (13, 14, 43, 44; 67, 87) of a working cylinder (11, 12, 41, 42; 70, 90) divides the cylinder cavity into an upper and a lower cylinder chamber, with the lower cylinder chamber serving for charging of, in particular, a fuel-air mixture during an upward motion of the piston (13, 14, 43, 44; 67, 87) and, during a downward motion, effects compression of the mixture, and with the upper cylinder chamber serving to compress a mixture during upward motion and, during downward motion, effects the working power of the mixture, characterized in that the lower and the upper cylinder chamber of each working cylinder (11, 12, 41, 42; 70, 90) can be connected to a storage chamber (28, 48) disposed parallel to the working cylinder (11, 12, 41, 42; 70, 90) via at least one inlet opening (30, 33, 50, 53) proximate to the cylinder head and via at least one outlet opening (31, 32, 51, 52) proximate to the cylinder base, wherein the storage chambers (28, 48) are aligned with two mutually opposite working cylinders (11, 41; 12, 42; 70, 90), and a sliding valve (27, 47), configured as a hollow cylinder, is displaceable in the direction of the longitudinal axis of the working cylinder (11, 12, 41, 42; 70, 90) and disposed inside of the storage chamber (28, 48), wherein the sliding valve (27, 47) has openings (28a, 48a) corresponding to the openings (30, 31, 32, 33, 50, 51, 52, 53) in the storage chamber (28, 48) and which can be displaced over these storage chamber openings (30, 31, 32, 33, 50, 51, 52, 53) to connect the cylinder chambers to the storage chamber (28, 48).

2. Internal combustion engine according to claim 1, characterized in that the storage chamber (28, 48) is subdivided into a plurality of stacked storage chambers in which one single sliding valve (27, 47) is disposed in a displaceable fashion.

3. Internal combustion engine according to claim 1 or 2, characterized in that the sliding valve (27, 47) is closed at its end by means of a lid.

4. Internal combustion engine according to one of the preceding claims, characterized in that the sliding valve (27, 47) cavity is divided by walls.

5. Internal combustion engine according to one of the preceding claims, characterized in that motion of the sliding valve (27, 47) is coupled to the motion of the piston (13, 14, 43, 44; 67, 87).

6. Internal combustion engine according to one of the preceding claims, characterized in that the sliding valve (27, 47) can be moved by a crank shaft (23; 92) cam.

7. Internal combustion engine according to one of the preceding claims, characterized in that the sliding valve (27, 47) is adjustable relative to the crank shaft (23; 92).

8. Internal combustion engine according to one of the preceding claims, characterized in that the crank shaft (23; 92) is disposed in a sidewardly displaced manner and two mutually opposing storage chambers (28, 48) share a common sliding valve (27, 47) bridging the crank case and having an undivided cavity, and the sliding valve (27, 47) can be moved by a cam of the sidewardly displaced crank shaft (23; 92) via a sidewardly projection collar means, in particular, via a sidewardly attached link.

9. Internal combustion engine according to one of the claims through 7, characterized in that the sliding valves (27, 47) of two oppositely positioned storage chambers (28, 48) are connected to each other by means of a sliding valve rod into a sliding valve unit and the sliding valve unit can be moved by a crank shaft (23, 92) cam via a suitable device, in particular via a link.

10. Internal combustion engine according to one of the preceding claims, characterized in that, through the openings (28a, 48a) in the sliding valves (27, 47) and by means of displacement of the sliding valve (27, 47), first the outlet opening (32) of a first working cylinder (11; 41) together with the inlet opening (33) of a second oppositely running working cylinder (12; 42) can be opened and subsequently closed to push compressed gas out of the first working cylinder (11) into the cavity of the sliding valve (27, 47) and then into the second working chamber (12), and thereafter the outlet opening (31) of the second working cylinder (12) together with the inlet opening (30) of the first working cylinder (11) can be opened and subsequently closed to push compressed gas out of the first working cylinder (11) into the cavity (28, 48) of the control valve (27, 47) and therefrom into the second working cylinder (12).

11. Internal combustion engine according to one of the preceding claims, characterized in that the cavity of a sliding valve (27, 47) is subdivided by a partition running transverse to its longitudinal axis to direct the flow of gas to a processing chamber along its path of travel from one to the other working cylinder (11, 12; 41, 42).

12. Internal combustion engine according to one of the preceding claims, characterized in that openings are provided in the working cylinders (11, 12, 41, 42) for inlet channels (61, 81; 63, 83), for fresh air, or for an air-fuel mixture and for circulation air, as well as outlet channels (62, 82) for exhaust gas, which can be sealed by means of additional sliding valves (65, 85), wherein these additional sliding valves (65, 85) can be directly or indirectly moved by a crank shaft (92) cam.

13. Internal combustion engine according to claim 12, characterized in that the circulation air inlet opening (63, 83), together with the exhaust gas outlet opening (62, 82), can be sealed by a common circulation air exhaust gas sliding valve (65, 85).

14. Internal combustion engine according to claim 13, characterized in that the cavity in which the circulation air exhaust gas sliding valve (65, 85) moves, forms a portion of the circulation air channel.

15. Internal combustion engine according to claim 14, characterized in that the cavity in which the circulation air exhaust gas sliding valve (65, 85) moves is connected to the cylinder (70, 90) by means of openings.

16. Internal combustion engine according to one of the preceding claims, characterized in that the internal combustion engine comprises an auxiliary compressor, in particular an exhaust gas turbo compressor, for circulation of the upper cylinder chambers and for charging the lower cylinder chambers.

17. Internal combustion engine according to one of the preceding claims, characterized in that additional engine chambers, in particular a processing chamber, can be connected to the storage chambers (28, 48) and, for each additional chamber, at least one inlet opening is provided through which gas can flow from the additional chamber into the storage chamber (28; 48) as well as at least one outlet opening through which gas can flow out of the storage chamber (28; 48) into the additional chamber.

## Revendications

1. Moteur à combustion interne pour fonctionnement à deux temps, comportant un certain nombre de cylindres de travail (11, 12, 41, 42; 70, 90), dans lequel deux cylindres de travail (11, 12; 41, 42; 70, 90) sont chaque fois situés en face l'un de l'autre, dans l'alignement l'un de l'autre, séparés par un carter de vilebrequin, dans lequel chaque cylindre de travail (11, 12, 41, 42) est séparé du carter de vilebrequin par un fond de cylindre et le fond de cylindre présente une ouverture pour le passage d'une tige de piston (15, 16), dans lequel deux cylindres de travail situé en face l'un de l'autre (11, 12; 41, 42; 70, 90) présentent une tige de piston commune (15; 16) aux extrémités de laquelle sont fixés les pistons (12, 13, 43, 44; 67, 87) des cylindres de travail (11, 12, 41, 42; 70, 90), dans lequel, à peu près au milieu de la tige de piston (15, 16), est disposé un dispositif de vilebrequin, en particulier une coulisse de vilebrequin (17, 18; 66), dans lequel un coulisseau (19, 20) se déplace en va-et-vient transversalement par rapport à l'axe longitudinal d'un vilebrequin (23) et un maneton du vilebrequin (23; 92) est porté dans le coulisseau (19, 20), dans lequel le piston (13, 14, 43, 44; 67, 87) d'un cylindre de travail (11, 12, 41, 42; 70, 90) divise l'espace creux du cylindre en un espace supérieur et en un espace inférieur du cylindre, et dans lequel, lors du mouvement du piston (13, 14, 43, 44; 67, 87) vers le haut, l'espace inférieur du cylindre sert au chargement, en particulier, d'un mélange carburant-air, lors du mouvement vers le bas, sert à la compression du mélange et, lors du mouvement vers le haut, l'espace supérieur du cylindre sert à la compression du mélange et, lors du mouvement vers le bas, sert à la puissance de travail du mélange,
caractérisé par le fait,
que l'espace inférieur et que l'espace supérieur de chaque cylindre de travail (11, 12, 41, 42; 70, 90) peuvent être reliés, par l'intermédiaire d'au moins unc ouverture d'entrée (30, 33, 50, 53) située au voisinage de la culasse, et par l'intermédiaire d'au moins une ouverture de sortie (31, 32, 51, 52) située au voisinage du fond du cylindre, avec un espace accumulateur (28, 48) disposé parallèlement au cylindre de travail (11, 12, 41, 42; 70, 90), dans lequel les espaces accumulateurs (28, 48) de deux cylindres de travail (11, 41; 12, 42; 70, 90) situés en face l'un de l'autre, sont disposés en alignement,
qu'est prévu un tiroir de commande (27) qui est conçu sous forme d'un cylindre creux et qui, à l'intérieur de l'espace accumulateur (28, 38), peut coulisser selon la direction de l'axe longitudinal des cylindres de travail (11, 12, 41, 42; 70, 90), et
que le tiroir de commande (27, 47) présente, en correspondance avec les ouvertures (30, 31, 32, 33, 50, 51, 52, 53) de l'espace accumulateur (28, 48) des évidements (28a, 48a), qui sont disposés avec possibilité de coulisser au-dessus des ouvertures (30, 31, 32, 33, 50, 51, 52, 53) pour relier les espaces des cylindres à l'espace accumulateur (28, 48).

2. Moteur à combustion interne selon la revendication 1, caractérisé par le fait que l'espace accumulateur (28, 48) est divisé en plusieurs espaces accumulateurs qui sont disposés l'un derrière l'autre et dans lesquels est disposé, avec possibilité de coulisser, un unique tiroir de commande (27, 47).

3. Moteur à combustion interne selon la revendication 1 ou 2, caractérisé par le fait que le tiroir de commande (27, 47) est obturé par des couvercles à ses faces frontales.

4. Moteur à combustion interne selon l'une des revendications précédentes, caractérisé par le fait que l'espace creux du tiroir de commande (27, 47) est partagé par des parois.

5. Moteur à combustion interne selon l'une des revendications précédentes, caractérisé par le fait que les déplacements du tiroir de commande (27, 47) sont couplés aux déplacements des pistons (13, 14, 43, 44; 67, 87).

6. Moteur à combustion interne selon l'une des revendications précédentes, caractérisé par le fait que le tiroir de commande (27, 47) peut être déplacé par un excentrique du vilebrequin (23; 92).

7. Moteur à combustion interne selon l'une des revendications précédentes, caractérisé par le fait le tiroir de commande (27, 47) est réglable par rapport au vilebrequin (23; 92).

8. Moteur à combustion interne selon l'une des revendications précédentes, caractérisé par le fait que le vilebrequin (23; 92) cst disposé décalé latéralement, que deux espaces accumulateurs (28, 48) disposés en face l'un de l'autre présentent un tiroir de commande (27, 47), qui ponte le carter de vilebrequin et présente un espace creux non divisé et que le tiroir de commande (27, 47), par l'intermédiaire d'un dispositif saillant latéralement, en particulier d'une coulisse fixée latéralement, peut être déplacé par un excentrique du vilebrequin (23, 92) décalé latéralement.

9. Moteur à combustion interne selon l'une des revendications 1 à 7, caractérisé par le fait que les tiroirs de commande (27, 47) de deux espaces accumulateurs (28, 48) situés en face l'un de l'autre sont reliés l'un à l'autre par une tige de tiroir pour donner un sous-ensemble de tiroir de commande et que le sous-ensemble de tiroir de commande peut, par l'intermédiaire d'un dispositif approprié, en particulier d'une coulisse, être déplacé par un excentrique du vilebrequin (23, 92).

10. Moteur à combustion interne selon l'une des revendications précédentes, caractérisé par le fait que, grâce aux évidements (28a, 48a) prévus dans les tiroirs de commande (27, 47) lors du coulissement du tiroir de commande (27, 47), alternativement, d'abord l'ouverture de sortie (32) d'un premier cylindre de travail (11, 41) en même temps que l'ouverture d'entrée (33) d'un second cylindre de travail (12; 42) en opposition de phase peuvent s'ouvrir puis se fermer, afin que du gaz comprimé sortant du premier cylindre de travail (11) puisse être refoulé dans l'espace creux du tiroir de commande (27, 47) et, de là, que du gaz comprimé puisse être refoulé dans le second cylindre de travail (12), puis que l'ouverture de sortie (31) du second cylindre de travail (12), en même que l'ouverture d'entrée (30) du premier cylindre de travail (11), peuvent s'ouvrir puis se fermer afin que du gaz comprimé sortant du premier cylindre de travail (11) puisse être refoulé dans l'espace creux (28, 48) du tiroir de commande (27, 47) et de là que du gaz comprimé puisse être refoulé dans le second cylindre de travail (12).

11. Moteur à combustion interne selon l'une des revendications précédentes, caractérisé par le fait que l'espace creux d'un tiroir de commande (27, 47) est partagé par des cloisons orientées transversalement par rapport à son axe longitudinal, ce par quoi le flux de gaz peut, sur son chemin allant de l'un à l'autre des cylindres de travail (11, 12; 41, 42), être orienté pour passer par une chambre de traitement.

12. Moteur à combustion interne selon l'une des revendications précédentes, caractérisé par le fait que dans les cylindres de travail (11, 12, 41, 42) sont prévues, pour de l'air frais ou pour un mélange carburant-air et pour de l'air de balayage, des canaux d'entrée (61, 81; 63, 83) et, pour des gaz d'échappement, des canaux de sortie (62, 82) qui peuvent être obturés au moyen d'autres tiroirs de commande (65, 85), ces autres tiroirs de commande (65, 85) étant déplacés, indirectement ou directement, par un excentrique du vilebrequin (92).

13. Moteur à combustion interne selon la revendication 12, caractérisé par le fait que l'ouverture d'entrée (63, 83) de l'air de balayage, en même temps que l'ouverture de sortie (62, 82) des gaz d'échappement, peuvent être obturés par un tiroir commun air de balayage-gaz d'échappement (65, 85).

14. Moteur à combustion interne selon la revendication 13. caractérisé par le fait que l'espace creux dans lequel se déplace le tiroir air de balayage-gaz d'échappement (65, 85) forme une partie du canal d'air de balayage.

15. Moteur à combustion interne selon la revendication 14, caractérisé par le fait que l'espace creux dans lequel se déplace le tiroir air de balayage-gaz d'échappement (65, 85) est relié au cylindre (70, 95) par des ouvertures.

16. Moteur à combustion interne selon l'une des revendications précédentes, caractérisé par le fait que le moteur à combustion interne présente un compresseur auxiliaire, en particulier un turbocompresseur sur gaz d'échappement, pour le balayage des espaces supérieurs des cylindres et en même temps pour le chargement des espaces inférieurs des cylindres.

17. Moteur à combustion interne selon l'une des revendications précédentes, caractérisé par le fait qu'aux espaces accumulateurs, (28, 48) peuvent être reliés d'autres espaces creux existant dans le moteur, en particulier un réservoir pour traitement, et que pour chaque espace creux relié, sont prévues au moins une ouverture d'entrée par laquelle un flux de gaz peut s'écouler, de l'espace creux, dans l'espace accumulateur (28; 48) et au moins une ouverture de sortie par laquelle un flux de gaz peut s'écouler, de l'espace accumulateur (28; 48), dans l'espace creux.
